**Europäisches Patentamt**

**European Patent Office**

**Office européen des brevets**

(19)

(11) Veröffentlichungsnummer: **0 324 499 B1**

(12) **EUROPÄISCHE PATENTSCHRIFT**

(45) Veröffentlichungstag der Patentschrift :
22.05.91 Patentblatt 91/21

(51) Int. Cl.$^5$ : **F16H 53/02, F01L 1/04, B21D 53/84**

(21) Anmeldenummer : **89100548.0**

(22) Anmeldetag : **13.01.89**

(54) **Verfahren zum Herstellen einer gebauten Welle.**

(30) Priorität : **14.01.88 DE 3800912**

(43) Veröffentlichungstag der Anmeldung :
**19.07.89 Patentblatt 89/29**

(45) Bekanntmachung des Hinweises auf die
Patenterteilung :
**22.05.91 Patentblatt 91/21**

(84) Benannte Vertragsstaaten :
**BE CH DE ES FR GB IT LI NL SE**

(56) Entgegenhaltungen :
**EP-A- 0 213 529**
**DE-A- 3 545 554**
**GB-A- 1 008 884**

(73) Patentinhaber : **Emitec Gesellschaft für Emissionstechnologie mbH
Hauptstrasse 150
W-5204 Lohmar 1 (DE)**

(72) Erfinder : **Maus, Wolfgang
Gut Horst
W-5060 Bergisch Gladbach 1 (DE)**
Erfinder : **Swars, Helmut
Riedweg 11
W-5060 Bergisch Gladbach 1 (DE)**

(74) Vertreter : **Neumann, Ernst Dieter, Dipl.-Ing. et al
HARWARDT NEUMANN PATENTANWÄLTE
Scheerengasse 2 Postfach 1455
W-5200 Siegburg (DE)**

## Beschreibung

Die vorliegende Erfindung betrifft eine aufgebaute Welle aus einer Hohlwelle und darauf durch Aufweiten derselben in einzelnen zugeordneten Längsabschnitten festgelegten Elementen mit einer Durchgangsbohrung, wie Lagerbuchsen, Hocken oder Zahnrädern und ein Verfahren zum Herstellen einer aufgebauten Welle durch Festlegen von Elementen wie Lagerbuchsen, Nocken oder Zahnrädern auf einer Hohlwelle mittels Aufweiten derselben in einzelnen zugeordneten Längsabschnitten.

In der EP-A-0 213 529 wird ein Verfahren zum Befestigen von Antriebselementen, wie Nocken, Zahnrädern oder Lagerschalen auf einer Hohlwelle vorgeschlagen, bei der diese aus einem handelsüblichen Rohr besteht, auf die die Elemente aufgeschoben werden, worauf sie durch Aufweiten der innerhalb derselben liegenden Abschnitte des Rohres auf demselben befestigt werden, wobei der Werkstoff des Rohres selbst plastisch, derjenige der Antriebselemente jedoch nur elastisch verformt wird, so daß durch die Rückfederung des letzteren ein fester Sitz auf der Welle erzielt wird. In den nicht vorveröffentlichten deutschen Patentanmeldungen P 36 33 435.9 und P 37 17 516.5 werden darüber hinaus Bemessungsregeln angegeben, nach denen in Abhängigkeit von den Werkstoffeigenschaften von Rohr und Antriebselementen, insbesondere von deren Elastizitätsmodul und Streckgrenze die geometrischen Bedingungen, z.B. der Rohrinnen- wie -außendurchmesser festzulegen sind, um einen drehfesten, kraftschlüssigen Verbund zwischen den Teilen herzustellen. Es hat sich gezeigt, daß bei der Anwendung der Erfindung insbesondere auf Nockenwellen von Kraftfahrzeugmotoren die nach diesen Bemessungsregeln erforderlichen Abmessungen der Teile aus konstruktiven oder Gewichtsgründen nicht immer zur Verfügung gestellt werden können.

Aufgabe der vorliegenden Erfindung ist es, eine Welle der genannten Art dahingehend auszugestalten, daß eine ausreichend sichere Befestigung der Antriebselemente auf der Hohlwelle auch dann erreicht werden kann, wenn die möglichen Abmessungen der Welle und der Antriebselemente eine Einhaltung der genannten Bemessungsregeln nicht gestatten.

Die Lösung dieser Aufgabe erfolgt dadurch, daß innerhalb von zumindest einzelnen Elementen in der Hohlwelle anliegende in situ plastisch aufgeweitete Stützhülsen angeordnet sind und zumindest die einzelnen Elemente in ihrer Durchgangsbohrung unter elastischer Verspannung stehen. Im Gegensatz zum oben beschriebenen Verfahren wird dann nicht mehr notwendigerweise das Material der Hohlwelle selbst plastisch verformt, sondern vorrangig das Material der Stützhülse. Dadurch kann die Dicke des einer plastischen Aufweitung unterworfenen Materials auf das erforderliche Maß erhöht werden, wenn das Material der Hohlwelle hierfür nicht ausreicht, um im Antriebselement die erforderliche Vorspannung zu erzeugen. Auch kann dann für die Hohlwelle ein Werkstoff gewählt werden, der nicht unbedingt die sonst für das plastische Aufweiten erforderlichen Eigenschaften aufweist, jedoch andere Vorteile, z.B. den einer Gewichtseinsparung bietet, z.B. Aluminium.

In vorteilhafter Ausgestaltung der Erfindung kann für die Stützhülse ein Werkstoff mit einem höheren Elastizitätsmodul oder einer höheren Streckgrenze gewählt werden, als sie der Werkstoff der Hohlwelle jeweils aufweist. Da ersterer dann bereits bei geringerer Dehnung plastifiziert wird, verringert sich auch das Maß seiner elastischen Rückfederung nach Abschluß des Aufweitungsvorganges, ein Maß, das von der elastischen Verformung der äußeren Teile beim Aufweitvorgang abzuziehen ist und dementsprechend die den Kraftschluß zwischen den Teilen bewirkende Kraft herabsetzt.

Bevorzugt weisen die Stützhülsen axial eine größere Länge aus als die Antriebselemente, d.h. die auf der Innenseite der Hohlwelle durch die Stützhülsen eingenommenen Abschnitte gehen axial über diejenigen hinaus, die auf der Außenseite derselben durch die Antriebselemente eingenommen werden. Hierdurch wird verhindert, daß es zu Ausbauchungen des Rohres mit Kerbwirkung an den Stirnflächen der Elemente kommen kann. Sind Antriebselemente mit nur geringem Abstand voneinander angeordnet, so kann eine gemeinsame Stützhülse vorgesehen werden, da sich die Überstände der Stützhülsen über die Elemente ohnehin berühren würden.

In weiterer besonderer Ausgestaltung der Erfindung werden Stützhülse mit innen konisch abgeschrägten Enden verwendet, wodurch ein allmählicher Übergang von aufgeweiteten zu nicht aufgeweiteten Abschnitten der Welle erzielt und insbesondere eine Kerbwirkung an abrupten Übergängen zwischen diesen Bereichen vermieden wird.

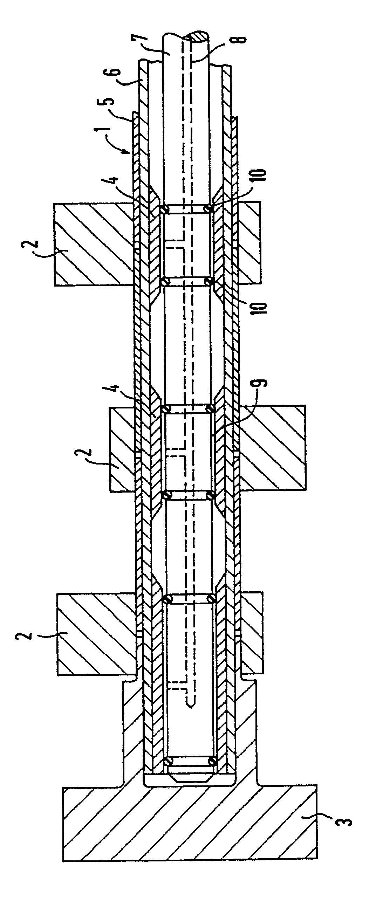

Ein Ausführungsbeispiel der Erfindung ist in der Zeichnung dargestellt, und zwar zeigt diese einen Abschnitt einer Nockenwelle im Längsaxialschnitt. Auf einer Hohlwelle 1 werden Nocken 2 und ein Endflansch 3 befestigt, indem Stützhülsen 4 plastisch aufgeweitet werden, die von innen unter Vorliegen eines gewissen Überstandes diejenigen Bereiche der Hohlwelle 1 umfassen, die außen von den Antriebselementen (hier Nocken 2 und Endflansch 3) eingenommen werden. Dabei werden die Nocken 2 und der Endflansch 3 nur im elastischen Bereich verformt, so daß sie nach Beendigung des Aufweitungsvorganges zurückfedern und so einen festen, kraftschlüssigen Verbund mit der Hohlwelle 1 bilden. Die Werkstoffeigenschaften der Hohlwelle 1 können dann anders gewählt werden, als es bei einem unmittelbaren, dann ebenfalls plastischen Aufweiten derselben möglich wäre ; so z.B. kann die Hohlwelle 1 zur Gewichtsersparnis aus einer äußeren, aus hochfestem Stahl hergestellten Schicht 5 und einer inneren, z.B. aus Aluminium hergestellten Schicht 6 bestehen. Die äußere Schicht 5 kann dann von ihrer Festigkeit und ihrer Oberfläche so beschaffen sein, daß sie ohne weitere Bearbeitung als ein Partner in hier nicht gezeigten Gleit- oder Wälzlagern eingesetzt werden kann. Die Befestigung der Nocken 2 und des Endflansches 3 erfolgt vorzugsweise in einem Arbeitsgang mittels einer in die Hohlwelle eingeführten hydraulischen Drucksonde 7, in deren Innerem über einen mit Abzweigungen versehenen Kanal 8 Druckfluid Aufweitbereichen 9 zugeführt werden kann, die axial durch Ringdichtungen 10 begrenzt werden. Die Stützhülsen 4 sind an ihren Enden nach innen zu konisch abgeschrägt, so daß beim Aufweiten ein allmählicher Übergang zwischen den elastisch aufgeweiteten und den nicht belasteten Teilen der Hohlwelle 1 hergestellt wird. Das Verfahren bietet besondere Vorteile, wenn wie hier der Endflansch 3 aus übergeordneten, z.B. für eine Verwendung der Nockenwelle in einem Kraftfahrzeugsmotor maßgeblichen Gründen in ihrem Außendurchmesser so beschränkt ist, daß die verbleibende Dicke des Bauteiles nicht ausreicht, um eine zur Erzielung des erforderlichen Anpreßdrucks zur Hohlwelle 1 erforderliche Rückfederung zu ermöglichen. Ferner wird die Einleitung des über den Endflansch 3 der Nockenwelle mitgeteilten Drehmomentes in die Hohlwelle 1 verbessert und die Gefahr eines Schlupfes zwischen diesen beiden Teilen verringert.

## Ansprüche

1. Aufgebaute Welle aus einer Hohlwelle (1) und darauf durch Aufweiten derselben in einzelnen zugeordneten Längsabschnitten festgelegten Elementen (2, 3) mit einer Durchgangsbohrung, wie Lagerbuchsen, Nocken oder Zahnrädern, dadurch gekennzeichnet, daß innerhalb von zumindest einzelnen Elementen in der Hohlwelle (1) anliegende in situ plastisch aufgeweitete Stützhülsen (4) angeordnet sind und zumindest die einzelnen Elemente in ihrer Durchgangsbohrung unter elastischer Verspannung stehen.

2 Aufgebaute Welle nach Anspruch 1, dadurch gekennzeichnet, daß der Werkstoff der Stützhülsen einen höheren Elastizitätsmodul oder eine höhere Streckgrenze als der Werkstoff der Hohlwelle (1) aufweist.

3. Aufgebaute Welle nach einem der Ansprüche 1 oder 2, dadurch gekennzeichnet, daß die Stützhülsen (4) axial länger sind als die zugeordneten Elemente (2).

4. Aufgebaute Welle nach einem der Ansprüche 1 bis 3, dadurch gekennzeichnet, daß die Stützhülsen (4) innen konisch abgeschrägte Enden haben.

5. Aufgebaute Welle nach einem der Ansprüche 1 bis 4, dadurch gekennzeichnet, daß die Hohlwelle (1) aus Aluminium oder einem ähnlichen Werkstoff besteht.

6. Aufgebaute Welle nach einem der Ansprüche 1 bis 5, dadurch gekennzeichnet, daß die Hohlwelle (1) aus zwei Schichten (5, 6) aufgebaut ist, wobei insbesondere die äußere aus einem hochfesten Lagerwerkstoff besteht.

7. Verfahren zum Herstellen einer aufgebauten Welle durch Festlegen von Elementen (23) wie Lagerbuchsen, Nocken oder Zahnrädern auf einer Hohlwelle (1) mittels Aufweiten derselben in einzelnen zugeordneten Längsabschnitten, dadurch gekennzeichnet, daß zumindest in einzelne der elastisch aufzuweitenden Abschnitte der Hohlwelle (1) Stützhülsen (4) im wesentlichen spielfrei eingeschoben werden und unter Überschreiten der Elastizitätsgrenze ihres Werkstoffes aufgeweitet werden.

## Claims

1. Composite shaft made up of a hollow shaft (1) and elements (2, 3) with a through bore, such as bearing bushes, cams or gear wheels, fixed on it through expansion of the same in individual associated longitudinal sections, characterised in that inside at least single elements in the hollow shaft (1) adjacent supporting sleeves (4) which have been plastically expanded in situ are disposed and at least the single elements are under elastic restraint in their through bore.

2. Composite shaft as claimed in Claim 1, characterised in that the material of the supporting sleeves has a higher modulus of elasticity or a higher yield strength than the material of the hollow shaft (1).

3. Composite shaft as claimed in one of the Claims 1 or 2, characterised in that the supporting sleeves (4) are axially longer than the associated elements (2),

4. Composite shaft as claimed in one of the Claims 1 to 3, characterised in that the supporting sleeves (4) have internal conically chamfered ends.

5. Composite shaft as claimed in one of the Claims 1 to 4, characterised in that the hollow shaft (1) is made of aluminium or a similar material.

6. Composite shaft as claimed in one of the Claims 1 to 5, characterised in that the hollow shaft (1) is built up out of two layers (5, 6) whereby in particular the outer one consists of a high strength bearing material.

7. Method for producing a composite shaft by fixing elements (2, 3) such as bearing bushes, cams or gear wheels on a hollow shaft (1) by means of expending the same in individual, associated longitudinal sections,
characterised in that supporting sleeves (4) are inserted largely free from play at least into individual ones of the sections of the hollow shaft (1) which are to be elastically expanded, and are expanded with the elastic limit of their material being exceeded.

**Revendications**

1. Arbre composite constitué d'un arbre creux (1) et d'éléments (2, 3) qui y sont fixés par dilatation de celui-ci en des portions longitudinales conjuguées individuelles, ces éléments tels que des douilles de portée, cames ou roues dentées, comportant un trou de passage,
caractérisé par le fait que des manchons de soutien (4) élargis plastiquement in situ, s'appliquant dans l'arbre creux (1), sont agencés au moins à l'intérieur d'éléments individuels, et au moins les éléments individuels se trouvent sous contrainte élastique dans leur trou de passage.

2. Arbre composite selon revendication 1, caractérisé par le fait que la matière des manchons de soutien présente un module d'élasticité plus élevé, ou une limite d'allongement plus élevée, que la matière de l'arbre creux (1).

3. Arbre composite selon l'une des revendications 1 ou 2,
caractérisé par le fait que les manchons de soutien (4) sont axialement plus longs que les éléments conjugués (2).

4. Arbre composite selon l'une des revendications 1 à 3,
caractérisé par le fait que les manchons de soutien (4) ont des extrémités chanfreinées intérieurement en cône.

5. Arbre composite selon l'une des revendications 1 à 4,
caractérisé par le fait que l'arbre creux est en aluminium ou en une matière analogue.

6. Arbre composite selon l'une des revendications 1 à 5,
caractérisé par le fait que l'arbre creux (1) est composé de deux couches (5, 6), la couche extérieure étant notamment constituée par une matière à haute résistance, pour palier.

7. Procédé de réalisatinn d'un arbre composite par fixation d'éléments (23) tels que douilles de portée, cames ou roues dentées, sur un arbre creux (1), par dilatation de celui-ci en des portions longitudinales individuelles conjuguées,
caractérisé par le fait que des manchons de soutien (4) sont introduits sensiblement sans jeu, au moins dans des portions individuelles de l'arbre creux (1) à dilater élastiquement, et sont dilatés en dépassant la limite élastique de leur matière.